# EUROPEAN PATENT APPLICATION

(11) **EP 4 797 073 A1**
(43) Date of publication of application: **26.08.2026**
(21) Application number: 25193207.5
(22) Date of filing: 31.07.2025
(51) Int. Cl.: G06F 8/34, G06F 11/32, G06N 3/0475, G06N 20/00, G06Q 10/0633, G06F 8/41

(54) **INTERACTIVE VISUALIZATION OF WORKFLOW AUTOMATION**

(30) Priority: 20.02.2025 US 202563760902 P; 10.07.2025 US 202519265332
(71) Applicant: Palantir Technologies Inc., Aventura, Florida 33180 (US)
(72) Inventor: RAFIDI, Joseph, Denver (US); KHAN, Kamran, Denver (US)
(74) Representative: Derry, Paul Stefan

(57) **Abstract**

A computer-implemented method may include: generating an interactive graphical visualization including a first node representing an automation object, a second node representing an action object, and a third node representing a data object type or a data object; determining one or more conditions of the automation object which, when satisfied, trigger an automation of the automation object; determining that the one or more conditions reference the data object or a property; determining that execution of an action of the action object causes the one or more conditions to be satisfied; updating the interactive graphical visualization to include a first edge connecting the second node and the first node to represent that the execution of the action of the action object can cause the one or more conditions to be satisfied to trigger the automation.

## Description

### TECHNICAL FIELD

The present disclosure relates to systems and techniques for data integration, analysis, and visualization. More specifically, some embodiments of the present disclosure relate to automation dependency analysis and associated interactive graph visualizations.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more software-based workflows that include automations. For example, a software application or a software-based workflow can facilitate systematic organization and automation of tasks and processes on computing systems, and may streamline operations and enhance efficiency in the execution of tasks and processes. Once created or deployed, a software-based workflow may be operated, and/or updated to accomplish certain user objectives.

### SUMMARY

The systems, methods, and devices described herein each have several aspects, no single one of which is solely responsible for its desirable attributes. Without limiting the scope of this disclosure, several non-limiting features will now be described briefly.

Software-based workflows or software applications can facilitate systematic organization and automation of tasks and processes on computing systems, and may streamline operations and enhance efficiency in the execution of tasks and processes. Once created or deployed, a workflow or a software application may be operated, and/or updated to accomplish certain user objectives automatically. For example, an automation can be set up to send an email or alert whenever certain condition(s) is met (e.g., a processor core is not assigned a cache or system memory allocation). However, it may be difficult to track or understand dependencies associated with a chain of events in which multiple automations are designed, chained, and/or triggered to fulfill an objective or solve a problem. For example, currently there may be no efficient way for a system to determine potential interactions (e.g., dependencies) between multiple automations and actions or functions that, when executed, trigger the automations. Further, it may be desirable to generate interactive graphical visualization(s) including nodes and edges to depict relationships between data objects, actions, functions, and/or automations for visualizing that, for example, an action can trigger an automation while another action cannot trigger the automation.

The present disclosure describes systems and methods (generally collectively referred to herein as a "workflow visualization system" or simply a "system") that can advantageously overcome various of the technical challenges mentioned above, among other technical challenges. More specifically, various implementations of the present disclosure can advantageously generate interactive graphical visualizations (e.g., generation of graphical representations including nodes and edges to represent data objects, action objects, function objects, automation objects, and/or software applications), and/or execute data processing and/or machine learning techniques to determine and/or enable management of relationships between multiple automations and components (e.g., data objects, action objects, function objects, logic objects, and/or the like) that trigger automations of the automation objects. Advantageously, the system may provide improvements to computer operations and interactive user interfaces through determining and generating interactive node graphs for interactive graphical analysis of dependencies, relationships, and interactions among components (e.g., data objects, action objects, function objects, automation objects, logic objects, and/or the like) associated with software-based workflows. By enabling the system to more efficiently determine, track, manage, and/or understand dependencies between automations and components that trigger the automations, the problem of tracking or debugging complex or interconnected automation chains can be effectively addressed. Additionally, the system can optionally leverage one or more large language models (LLMs) to analyze code used to implement certain actions and/or functions for more effectively or accurately identifying and distinguishing actions and/or functions that trigger particular automation(s) from actions and/or functions that do not trigger the particular automation(s). As such, an interactive graphical representation that includes nodes and edges to depict automations and identified triggering actions and/or functions can be more accurate, less complicated, and optimized. By collecting data (e.g., data objects, properties included in data objects, and/or links between data objects) that are referenced in condition(s) which, when satisfied, trigger an automation of an automation object, and determining execution of which actions or functions can affect the data to cause the condition(s) to be satisfied, the system can advantageously generate clear and comprehensive graphs of potential triggers, enhance the understanding and debugging of interconnected automations, and improve the transparency and manageability of automated systems through generating of interactive visualizations of the underlying processes.

Various embodiments of the present disclosure provide improvements to various technologies and technological fields. For example, as described above, the system may advantageously utilize interactive visualizations, data analysis, data processing, and/or machine learning techniques to perform interactive analysis of one or more conditions which, when satisfied, trigger an automation. Other technical benefits provided by various embodiments of the present disclosure include, for example, utilizing one or more large language models (LLMs) to analyze code used to implement certain actions and/or functions for more effectively or accurately identifying and distinguishing actions and/or functions that trigger particular automation(s) from actions and/or functions that do not trigger the particular automation(s).

Additionally, various implementations of the present disclosure are inextricably tied to computer technology. In particular, various implementations rely on detection of user inputs via graphical user interfaces, calculation of updates to displayed electronic data based on those user inputs, automatic processing of related electronic data, application of language models and/or other artificial intelligence, and provision of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein.

According to various implementations, large amounts of data may be automatically and dynamically processed interactively in response to user inputs, and the processed data is efficiently and compactly presented to a user through interactive user interfaces of the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable the system to more quickly and accurately determine, access, navigate, assess, and/or digest the model-related data than previous systems.

Further, the interactive and dynamic user interfaces described herein are enabled by innovations in efficient interactions between the user interfaces and underlying systems and components. For example, disclosed herein are improved methods that generate interactive visualizations, and/or execute data analysis, data processing and/or machine learning techniques to perform interactive analysis of dependencies, relationships, and interactions among components (e.g., data objects, action objects, function objects, automation objects, logic objects, and/or the like) associated with software-based workflows. According to various implementations, the system (and related processes, functionality, and interactive graphical user interfaces) can advantageously more efficiently determine, track, manage, and/or understand dependencies between automations and components that trigger the automations. As such, an interactive graphical representation that includes nodes and edges to depict automations and identified triggering actions and/or functions can be more accurate, less complicated, and optimized.

Thus, various implementations of the present disclosure can provide improvements to various technologies and technological fields, and practical applications of various technological features and advancements. For example, as described above, existing software application management and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., automatically generating machine learning models to fulfill specific user requests, processing and analysis of large amounts of electronic data, management of data migrations and integrations, and/or the like) are intimately tied to, and enabled by, computer technology, and would not exist except for computer technology. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example workflow visualization system in an example computing environment, according to various implementations of the present disclosure;
FIG. 2 shows an example block diagram of example aspects of the workflow visualization system, according to various embodiments of the present disclosure;
FIG. 3 illustrates an object-centric conceptual data model, according to various embodiments of the present disclosure;
FIG. 4 illustrates an example graphical representation of relationship between action objects and automation objects, according to various embodiments of the present disclosure;
FIG. 5 is a flowchart illustrating example routines for generating interactive graphical visualizations to represent action objects and automation objects, according to various embodiments of the present disclosure;
FIG. 6 is a flowchart illustrating example routines for determining that execution of an action of an action object affects a property of a data object, according to various implementations of the present disclosure;
FIG. 7 is a flowchart illustrating example routines for providing an information panel including properties of a data object and automations associated with a property of the data object, according to various implementations of the present disclosure;
FIGS. 8, 9, 10, 11, and 12 show example interactive graphical user interfaces associated with the workflow visualization system, according to various implementations of the present disclosure; and
FIG. 13 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

As mentioned above, software-based workflows or software applications can facilitate systematic organization and automation of tasks and processes on computing systems, and may streamline operations and enhance efficiency in the execution of tasks and processes. Once created or deployed, a workflow or a software application may be operated, and/or updated to accomplish certain user objectives automatically. For example, an automation can be set up to send an email or alert whenever certain condition(s) is met (e.g., a battery-powered robot is not assigned a charging station, or an endpoint device is not assigned a communication channel). However, it may be difficult to track or understand dependencies associated with a chain of events in which multiple automations are designed, chained, and/or triggered to fulfill an objective or solve a problem. For example, currently there may be no efficient way for a system to determine potential interactions (e.g., dependencies) between multiple automations and actions or functions that, when executed, trigger the automations. Further, it may be desirable to generate interactive graphical visualization(s) including nodes and edges to depict relationships between data objects, actions, functions, and/or automations for visualizing that, for example, an action can trigger an automation while another action cannot trigger the automation.

As also noted above, the present disclosure describes systems and methods (generally collectively referred to herein as a "workflow visualization system" or simply a "system") that can advantageously overcome various of the technical challenges mentioned above, among other technical challenges. More specifically, various implementations of the system of the present disclosure can advantageously generate interactive graphical visualizations (e.g., generation of graphical representations including nodes and edges to represent data objects, action objects, function objects, automation objects, and/or software applications), and/or execute data processing and/or machine learning techniques to determine and/or enable management of relationships between multiple automations and components (e.g., data objects, action objects, function objects, logic objects, and/or the like) that trigger automations of the automation objects.

Advantageously, the system may provide improvements to computer operation and interactive user interfaces through determining and generating interactive node graphs for interactive graphical analysis of dependencies, relationships, and interactions among components (e.g., data objects, action objects, function objects, automation objects, logic objects, and/or the like) associated with software-based workflows. By enabling the system to more efficiently determine, track, manage, and/or understand dependencies between automations and components that trigger the automations, the problem of tracking or debugging complex or interconnected automation chains can be effectively addressed. Additionally, the system can optionally leverage one or more large language models (LLMs) to analyze code used to implement certain actions and/or functions for more effectively or accurately identifying and distinguishing actions and/or functions that trigger particular automation(s) from actions and/or functions that do not trigger the particular automation(s). As such, an interactive graphical representation that includes nodes and edges to depict automations and identified triggering actions and/or functions can be more accurate, less complicated, and optimized. By collecting data (e.g., data objects, properties included in data objects, and/or links between data objects) that are referenced in condition(s) which, when satisfied, trigger an automation of an automation object, and determining execution of which actions or functions can affect the data to cause the condition(s) to be satisfied, the system can advantageously provide clear and comprehensive graphs of potential triggers, enhance the understanding and debugging of interconnected automations, and improve the transparency and manageability of automated systems through generating of interactive visualizations of the underlying processes.

### Example Features Related to Interactive Graph Generation

As noted above, the system may generate interactive node graph or graphical visualizations comprising nodes and edges to provide interactive visualizations of data dependencies and relationships between automations and actions or functions that trigger the automations. For example, the system can access one or more data stores that store at least a first automation object, a first action object, a first data object type, and a first data object of the first data object type. The first data object type can include a first property type. The first data object can include a first property of the first property type. Based at least on the first automation object, the first data object, the first property, the first property type, and/or the first data object type, the system can optionally cause generation of an interactive user interface. The interactive user interface can include an interactive graphical visualization. The interactive graphical visualization can include a first node representing the first automation object, a second node representing the first action object, and a third node representing the first data object type or the first data object.

The system can determine one or more conditions of the first automation object which, when satisfied or met, trigger an automation of the first automation object. More specifically, the automation triggered when the one or more conditions are satisfied can include performing any types of operation(s) or task(s) (e.g., creating a sentence based on a phrase, sending an email to a particular recipient, issuing an power outage alert to an entity, generating a new support ticket for a customer support workflow, and/or the like). The first automation object and the one or more conditions can be stored in a database of the system using any suitable data structure. For example, the first automation object and/or the one or more conditions of the first automation object can be stored or defined using a JavaScript Object Notation ("JSON") format.

In some examples, the one or more conditions can reference at least one of: the first data object, the first data object type, the first property, the first property type, a link between the first data object and a second data object, a second property included in the second data object, and/or the like. The one or more conditions can correspond to occurrence of any real-world event(s) or satisfaction of any real-world condition(s). The one or more conditions can be simple (e.g., referencing only a particular data object) or more complex (e.g., referencing various data objects, various properties of various data objects, various links between multiple data object types). For example, the one or more conditions can be met or satisfied when a new customer support ticket is received. In this example, the one or more conditions can reference a data object representing the new customer support ticket. The automation triggered can include automatically generating a description of the new customer support ticket using machine learning techniques (e.g., a large language model (LLM)). As another example, the one or more conditions can be met or satisfied when a battery-powered robot is or is not assigned a charging station. In this example, the one or more conditions can reference the first data object of the first data object type representing the battery-powered robot, any link(s) between the first data object and other data objects, and/or a property included in a second data object of a second data object type representing the charging station. The automation triggered can include automatically initiating a pairing or reassignment process. In some embodiments, the one or more conditions can include at least one of: a modification of the first data object, a creation of the first data object, a deletion of the first data object, a modification of the first property, a creation of the first property, a deletion of the first property, a creation of a data object of the first data object type, a deletion of a data object of the first data object type, a creation of a property of the first property type, or a deletion of a property of the first property type.

In some examples, by analyzing the first automation object, the system can determine that the one or more conditions reference at least one of: the first data object, the first property, the first data object type, or the first property type. For example, the one or more conditions can be satisfied when a particular type of sentence (e.g., "CPU utilization is above 95%") is created, or when a phrase is updated or added (e.g., add "Attention required:" before "CPU utilization is above 95%") to the particular type of sentence. The one or more conditions can thus reference a data object representing the particular type of sentence and/or a property (e.g., the property representing the phrase used to generate the particular type of sentence) included in the data object. As another example, the first data object can represent a status (e.g., power on, power off, sleep, idle, or the like) of a laptop, and the one or more conditions can reference the first data object (e.g., the one or more conditions satisfied when the status being "power on"). By inspecting, parsing, or otherwise analyzing (e.g., using a data processing service and/or based on an ontology) the one or more conditions, the system can determine that the one or more conditions reference at least the data object or the property of the data object. In other embodiments as noted above, the system can determine that the one or more conditions reference various data objects (e.g., power outage alert data objects), various properties (e.g., names, addresses, temperature, velocity, currency, timestamp, and/or the like) included in various data objects, various links between multiple data objects (e.g., power outage alert data objects and power outage log data objects) by inspecting, parsing, or otherwise analyzing the one or more conditions.

In some examples, the system can further determine that execution of an action of the first action object affects at least one of: the first data object, the first property, the first data object type, or the first property type. For example, the system can determine that the execution of the action (e.g., add the phrase to the particular type of sentence) of the first action object affects the first data object or the first property included in the first data object to cause the one or more conditions to be satisfied, thereby triggering the automation of the first automation object. More specifically, the system can inspect, parse, or otherwise analyze a data structure (e.g., code, such as Python code, or other information stored using the "JSON" format for implementing the first action) that defines or specifies the first action object to determine whether the execution of the action of the first action object affects the first data object or the first property to cause the one or more conditions to be satisfied. The system can further determine that execution of an action of a second action object (e.g., update the particular type of sentence from "CPU utilization is above 95%" to "CPU utilization is above 50%") does not affect the first data object or the first property to cause the one or more conditions to be satisfied, thereby determining that the execution of the action of the second action object does not trigger the automation of the first automation object.

In some embodiments, as noted above, the first action object, the second action object, the first data object, and the first automation object can be already included, represented, or displayed through an interactive graphical visualization. For example, the interactive graphical visualization can include at least a first node representing the first automation object, a second node representing the first action object, a third node representing the first data object, and a fourth node representing the second action object. By parsing the interactive graphical visualization, the system can limit the determinations of what action objects and/or function objects affect the first data object or the first property to cause the one or more conditions to be satisfied to the first action object and the second action object that are included in the interactive graphical visualization. In other embodiments, the system can determine whether a third action object affects the first data object or the first property to cause the one or more conditions to be satisfied, where the third action object is not included in the interactive graphical visualization. In these embodiments, the system may further optionally add the third action object into the interactive graphical visualization when the system determines that the third action object affects the first data object or the first property to cause the one or more conditions to be satisfied.

The system may further receive a selection (e.g., from a user), made via the interactive user interface that provides the interactive graphical visualization, of a user interface element (e.g., a button, an icon, a tab, or the like) of the interactive user interface. In response to receiving the selection of the user interface element of the interactive user interface, the system may update the interactive graphical visualization to further include a first edge connecting the second node representing the first action object and the first node representing the first automation object. The first edge can represent that the execution of the action of the first action object can cause the one or more conditions to be satisfied to trigger the automation of the first automation object. The first edge can represent that the first action causes the one or more conditions to be satisfied to trigger the automation. In contrast, the fourth node may be unconnected to the first node to indicate that the execution of the action of the second action object does not affect the first data object or the first property to cause the one or more conditions to be satisfied to trigger the automation of the first automation object. Advantageously, by interacting with the interactive user interface, a user may be presented with the interactive graphical representation concisely showing (e.g., using edges connecting nodes representing actions and automations) what actions and/or functions can trigger certain automations.

### Example Features Related to Large Language Models (LLMs)

In some embodiments, the system may utilize one or more large language models (LLMs) to determine which action affects data objects, data object types, properties of data objects, property types, and/or links between data objects to cause one or more conditions of an automation object to be satisfied to trigger an automation (e.g., issue a notification when the one or more conditions are satisfied or met) of the automation object. For example, the one or more conditions may include that a property (e.g., a status of a data object representing an alert) included in a data object is set to a particular value (e.g., the status being "in progress"). The system may leverage a LLM to more effectively determine whether execution of an action of an action object affects the property included in the data object to cause the one or more conditions to be satisfied (e.g., causing the status being set to "in progress"). More specifically, the system may generate a prompt for the LLM. The prompt can include code (e.g., Python code) used to implement the action of the action object (e.g., set status of the data object type representing the alert to "in progress"). The system may then transmit the prompt to the LLM. In response to the prompt, the system may receive an output from the LLM indicating that the execution of the action of the action object sets the property (e.g., the status) included in the data object to the particular value (e.g., "in progress"). Based on the output, the system may generate an interactive graphical visualization comprising an edge connecting a first node representing the automation object and a second node representing the action object. In contrast, the system may similarly utilize the LLM to determine that execution of an action of a second action object (e.g., set status of the data object type representing the alert to "repair") does not set the property to the particular value (e.g., "in progress"), thereby not connecting the first node to a third node representing the second action object in the interactive graphical visualization.

Advantageously, by utilizing one or more LLMs to determine action(s) that cause the one or more conditions to be satisfied to trigger an automation, the system can more effectively or accurately identify and distinguish action objects that can trigger particular automation(s) from action objects that do not trigger the particular automation(s). As such, an interactive graphical visualization that includes nodes and edges to depict automations and identified triggering actions and/or functions can be more accurate, less complicated (e.g., with fewer edges by not connecting action objects that do not trigger an automation of an automation object to the automation object), and optimized.

Additionally and/or optionally, the system can utilize a LLM to determine whether execution of a function of a function object affects data objects, properties, and/or links between data objects to cause one or more conditions to be satisfied to trigger one or more automations of one or more automation objects. For example, the system may generate a prompt for the LLM, where the prompt includes function code used to implement the function. The function code may be complex (e.g., containing layers of nested or recursive function calls) or large in size (e.g., including thousands of lines of code). Nonetheless, the system may then transmit the prompt to the LLM to utilize the LLM to parse or analyze the function code to determine whether execution of the function causes the one or more conditions to be satisfied. The system may receive an output from the LLM, indicating that the execution of the function can affect certain data objects and/or properties to cause the one or more conditions to be satisfied to trigger an automation of a particular automation object. Based on the output from the LLM, the system may provide an interactive graphical visualization including at least a first node representing the function object, a second node representing the particular automation object, and an edge connecting the first node and the second node. The edge can indicate that the execution of the function of the function object can cause the one or more conditions to be satisfied to trigger the automation of the particular automation object.

### Example Features Related to Property Provenance

Besides generating interactive graphical visualizations showing connections between components (e.g., actions, functions, or the like) and automations triggered by the components, the system may optionally provide information indicative of lineage or provenance associated with properties included in data objects. For example, the system may provide information showing automation(s), action(s), function(s), and/or the like that reference, affects, or are otherwise associated with a property (e.g., an alert description) included in a data object (e.g., an outage alert represented by the data object). More specifically, the system may parse or analyze any automation objects, action objects, logic objects, and/or function objects known to the system to determine which automation objects, action objects, logic objects, and/or function objects are associated with (e.g., refers to) the property. The system may then provide a list that includes automation objects, action objects, and/or function objects that refer to the property to show provenance of the property.

In some embodiments, instead of parsing any automations, actions, and/or functions known to the system, the system can parse or analyze automation objects, action objects, and/or function objects dependent upon or "downstream" to the data object that includes the property. Advantageously, this can allow the system to more efficiently generate and provide provenance of the property.

### Example Features Related to User Interfaces

The system may further allow user to interact with the system through an interactive user interface (e.g., a graphical user interface ("GUI") or other types of user interfaces), and receive user operations on an interactive graphical visualization that is presented through the interactive user interface. As noted above, the system may use one or more interactive user interfaces to present the interactive graphical visualization associated with automations and actions or functions that trigger the automations. The interactive user interface may allow users to make selections on nodes, edges, and user interface elements within the interactive graphical visualization. For example, selecting a user interface element may cause the system to generate an interactive graphical visualization showing connections between automation objects and action objects that, when executed, trigger automations of the automation objects.

Besides presenting the interactive graphical representation and/or the software application through one or more interactive user interfaces, the system may utilize an interactive user interface to provide information panel(s) adjacent to the interactive graphical visualization. In some implementations, the information panel(s) may include information indicative of provenance associated with a property. For example, an information panel comprising one or more properties included in a data object, where the one or more properties of the data object can include the property. In response to receiving a user operation on the property, the system may provide through the information panel a list that includes one or more automation objects having one or more associated conditions that reference the property. As another example, the system may provide through an information panel information indicating that a data object or a property included in the data object is referenced by one or more conditions (e.g., creation of a data object of the data object type or updating the property of the data object type) of an automation object which, when satisfied, trigger an automation of the automation object.

### Further Example Information Related to Various Implementations

To facilitate an understanding of the systems and methods discussed herein, several terms are described below and herein. These terms, as well as other terms used herein, should be construed to include the provided descriptions, the ordinary and customary meanings of the terms, and/or any other implied meaning for the respective terms, wherein such construction is consistent with context of the term. Thus, the descriptions below and herein do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, attention-based and/or transformer architecture or functionality. LLMs can be useful for natural language processing, including receiving natural language prompts and providing natural language responses based on the text on which the model is trained. LLMs may not be data security- or data permissions-aware, however, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), GPT-4o, OpenAI o1, LLaMA (Large Language Model Meta AI), and BigScience Large Open-science Open-access Multilingual Language Model (BLOOM).

A Prompt (or "Natural Language Prompt" or "Model Input") can be, for example, a term, phrase, question, and/or statement written in a human language (e.g., English, Chinese, Spanish, and/or the like), and/or other text string, that may serve as a starting point for a language model and/or other language processing. A prompt may include only a user input or may be generated based on a user input, such as by a prompt generation module (e.g., of a document search system) that supplements a user input with instructions, examples, and/or information that may improve the effectiveness (e.g., accuracy and/or relevance) of an output from the language model. A prompt may be provided to an LLM which the LLM can use to generate a response (or "model output").

A User Operation (or "User Input") can be any operations performed by one or more users to user interface(s) and/or other user input devices associated with a system (e.g., the data extraction system). User operation can include a request for task(s) to be performed, such as by using a machine learning model and/or an LLM, in whole or in part. User operation can include a request for data, such as data accessed and/or processed by one or more services. User operation can include one or more queries, one or more questions, one or more requests, or the like. User operation may include one or more natural language instructions for some data analysis (e.g., prediction, estimation, classification, or the like) to be performed. User operations can include, for example, select, drag, move, group, or the like, one or more interactive graphical representations for updating an ontology.

A Software Application (or "Application") or a software-based workflow can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., send or unsend an email, edit or update a document, or the like) on various data objects of data object types (e.g., a document data object, a log data object, an email data object, or the like).

An Ontology can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. A data object can represent an action (e.g., an action object for performing any task and/or any operation for fulfilling any objective), a function (e.g., a function object implemented by code for performing any task and/or any operation for fulfilling any objective), a logic (e.g., a logic object used to determine if any information is needed for performing certain task and/or operation), an automation (e.g., an automation object for automatically performing any task and/or any operation), and/or the like. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Object Type (or "Object Type") is a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Example System and Related Computing Environment

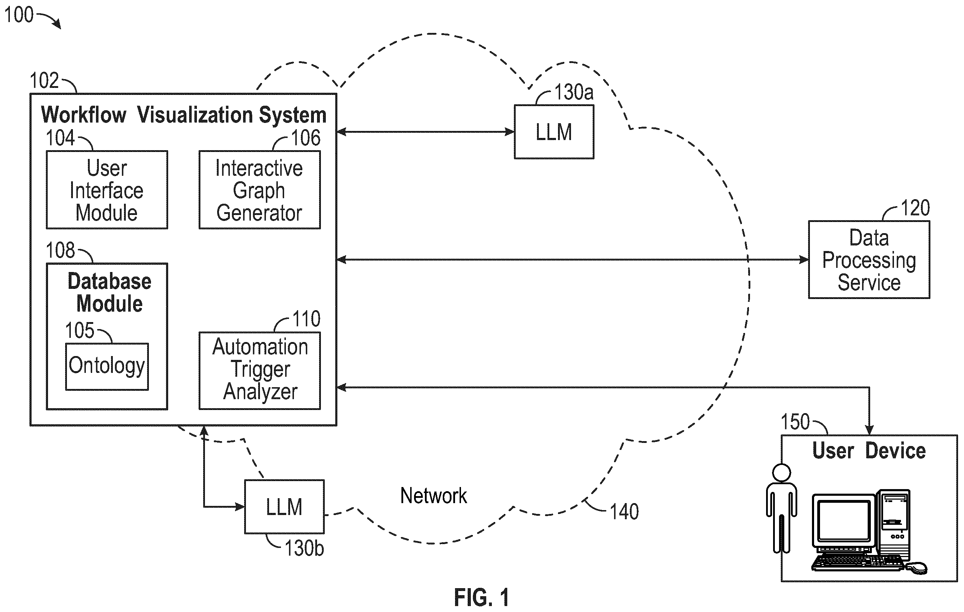

FIG. 1 illustrates an example computing environment 100 including an example workflow visualization system 102 in communication with various devices to respond to a user input or a triggering event, according to various implementations of the present disclosure. The example computing environment 100 includes the workflow visualization system 102, one or more LLMs (e.g., LLM 130a, and LLM 130b), a network 140, a data processing service 120, and a user device 150 (and/or user computing device). In the example of FIG. 1, the workflow visualization system 102 comprises various modules, including a user interface module 104, an interactive graph generator 106, an automation trigger analyzer 110, and a database module 108 that includes an ontology 105. In other embodiments, the workflow visualization system 102 may include fewer or additional components.

In the example of FIG. 1, the various devices are in communication via a network 140, which may include any combination of networks, such as one or more local area network (LAN), personal area network (PAN), wide area network (WAN), Global System for Mobile Communications (GSM) network, a Code Division Multiple Access (CDMA) network, a Long Term Evolution (LTE) network, the Internet, and/or any other communication network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In various implementations, modules of the illustrated components, such as the user interface module 104, the interactive graph generator 106, the database module 108, and the automation trigger analyzer 110 of the workflow visualization system 102, may communicate via an internal bus and/or via the network 140. Additionally, the workflow visualization system 102 may communicate with the one or more LLMs (e.g., the LLM 130a and the LLM 130b) and the data processing service 120 via the network 140 in the course of fulfilling an objective and/or a user input.

The data processing service 120 may include any quantity of services (or "plug-ins") and any available type of service. For example, the data processing service 120 may include one or more search services (e.g., a similarity search service, a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing the ontology 105 or performing search-arounds in the ontology 105 to surface linked objects or other data items) or any other services. In some implementations, the data processing service 120 may be a part of the workflow visualization system 102 (e.g., as part of a data processing service module of the workflow visualization system 102), in whole or in part.

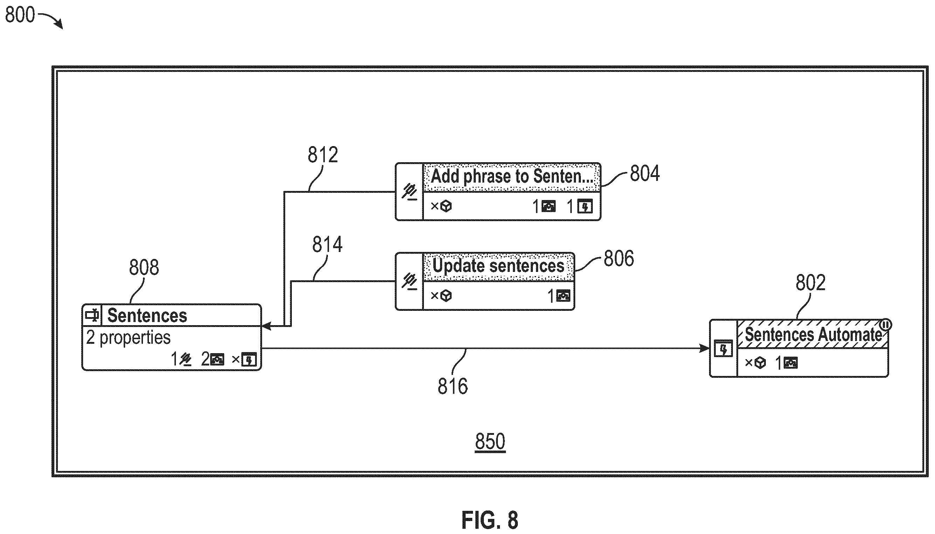

The user interface module 104 is configured to generate user interface data that may be rendered on a user device 150, such as to receive an initial user input, as well as later user input that may be used to initiate further data processing. In various implementations, the functionality discussed with reference to the user interface module 104, and/or any other user interface functionality discussed herein, may be performed by a device or service outside of the workflow visualization system 102 and/or the user interface module 104 may be outside the workflow visualization system 102. Example user interfaces that can be provided by the user interface module 104 (e.g., to the user device 150) will be described with reference to FIGS. 8, 9, 10, 11, and 12.

The database module 108 is configured to store data that may be accessed by the user device 150 and/or various aspects of the workflow visualization system 102, as described herein. For example, the database module 108 is configured to store data/information that may be utilized by the interactive graph generator 106, the automation trigger analyzer 110, and/or accessed or manipulated by the user device 150. The database module 108 of the workflow visualization system 102 may obtain and store data and/or information from the data processing service 120. Data that may be stored by the database module 108 may include any type of electronic data, such as error logs, code files, documents, text, data files, books, manuals, emails, images, audio, video, databases, metadata, positional data (e.g., geo-coordinates), sensor data, web pages, time series data, and/or any combination of the foregoing and/or the like. The database module 108 may store the data using the ontology 105, or based on the ontology 105, which may define data types and associated properties, and relationships among data types, data object types, properties, and/or the like. The ontology 105 may constitute a way to represent things in the world. The ontology 105 may be used by an organization to model a view on what objects exist in the world, what their properties are, and how they are related to each other. The ontology 105 may be user-defined, computer-defined, or some combination of the two. The ontology 105 may include hierarchical relationships among data object types.

As shown in FIG. 1, the workflow visualization system 102 may be capable of interfacing with multiple LLMs. This allows for experimentation, hot-swapping and/or adaptation to different models based on specific use cases or requirements, providing versatility and scalability to the system. In various implementations, the workflow visualization system 102 may interface with the LLM 130b and/or the LLM 130a in order to, for example, generate a natural language summary of a function code used to implement actions within the software application. Although FIG. 1 illustrates that the LLM 130a and the LLM 130b are external to the workflow visualization system 102, in various implementations the LLM 130a and/or the LLM 130b can be internal to the workflow visualization system 102.

In some implementations, the workflow visualization system 102 may generate interactive visualizations, and/or execute data analysis, data processing and/or machine learning techniques to determine and/or enable management of relationships between multiple automations and components (e.g., data objects, action objects, function objects, logic objects, and/or the like) that trigger automations of the automation objects. For example, the workflow visualization system 102 may generate interactive node graphs or graphical visualizations comprising nodes and edges to enable interactive visualizations of data dependencies and relationships between automations and actions or functions that trigger the automations.

More specifically, the workflow visualization system 102 (e.g., the interactive graph generator 106 and/or the automation trigger analyzer 110) may access one or more data stores (e.g., the database module 108) that store at least a first automation object, a first action object, a first data object type, and a first data object of the first data object type. The interactive graph generator 106 can cause generation of an interactive user interface that can be presented to the user device 150 through the user interface module 104. The interactive user interface can include an interactive graphical visualization that includes a first node representing the first automation object, a second node representing the first action object, and a third node representing the first data object type or the first data object.

The automation trigger analyzer 110 can determine one or more conditions of the first automation object which, when satisfied or met, trigger an automation of the first automation object. By analyzing the first automation object, the automation trigger analyzer 110 can determine that the one or more conditions reference at least one of: the first data object, the first property, the first data object type, or the first property type. The automation trigger analyzer 110 can further determine that execution of an action of the first action object affects at least one of: the first data object, the first property, the first data object type, or the first property type. The interactive graph generator 106 can update the interactive graphical visualization to further include a first edge connecting the second node representing the first action object and the first node representing the first automation object. The first edge can represent that the execution of the action of the first action object can cause the one or more conditions to be satisfied to trigger the automation of the first automation object.

### Example System and Related Modules

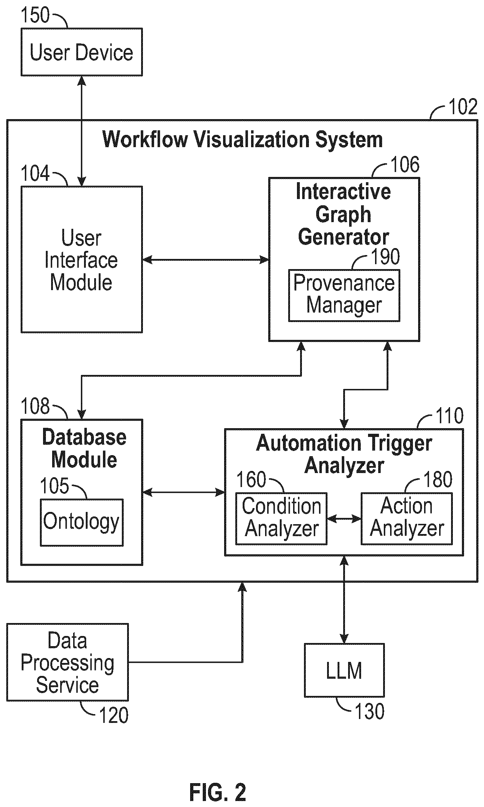

FIG. 2 depicts example connections and/or communications between various modules of the workflow visualization system 102, including the user interface module 104, the interactive graph generator 106, the database module 108, and the automation trigger analyzer 110. In other embodiments, the workflow visualization system 102 may include fewer or additional connections/communications. The indicated connections and/or data flows of FIG. 2 are exemplary of only certain processes performed by the workflow visualization system 102 and are not meant to include all possible blocks and participants.

As shown in FIG. 2, the interactive graph generator 106 includes at least a provenance manager 190. The provenance manager 190 can be utilized to generate interactive graphical visualizations based on dependencies, relationships, and interactions among components (e.g., data objects, action objects, function objects, automation objects, logic objects, and/or the like) associated with software-based workflows. The automation trigger analyzer 110 can include at least a condition analyzer 160 and an action analyzer 180. The condition analyzer 160 can analyze conditions of automation objects to determine which data objects, data object types, properties, property types, links between data objects, and/or the like are referenced by the conditions. The action analyzer 180 can analyze action objects and/or function objects to determine whether execution of actions and/or functions can cause the conditions of the automation objects to be satisfied.

In some embodiments, the interactive graph generator 106 and/or the automation trigger analyzer 110 can access one or more data stores (e.g., the database module 108 or other data store not shown in FIG. 2) that store at least a first automation object, a first action object, a first data object type, and a first data object of the first data object type. The first data object type can include a first property type. The first data object can include a first property of the first property type. Based at least on the first automation object, the first data object, the first property, the first property type, and/or the first data object type, the interactive graph generator 106 can generate an interactive user interface that can be provided to the user device 150 through the user interface module 104. The interactive user interface can include an interactive graphical visualization. The interactive graphical visualization can include a first node representing the first automation object, a second node representing the first action object, and a third node representing the first data object type or the first data object.

The condition analyzer 160 can determine one or more conditions of the first automation object which, when satisfied or met, trigger an automation of the first automation object. More specifically, the automation triggered when the one or more conditions are satisfied can include performing any types of operation(s) or task(s) (e.g., creating a sentence based on a phrase, sending an email to a particular recipient, issuing an power outage alert to an entity, generating a new support ticket for a customer support workflow, and/or the like). The first automation object and the one or more conditions can be stored in the database module 108 using any suitable data structure. For example, the first automation object and/or the one or more conditions of the first automation object can be stored or defined using a JavaScript Object Notation ("JSON") format.

The one or more conditions can reference any data object of any data object type, any data object type, any property, any property type, any link between data objects or data object types, and/or the like. In some examples, the one or more conditions can reference at least one of: the first data object, the first data object type, the first property, the first property type, a link between the first data object and a second data object, a second property included in the second data object, and/or the like. The one or more conditions can correspond to occurrence of any real-world event(s) or satisfaction of any real-world condition(s). In some examples, the one or more conditions can be simple (e.g., referencing only a particular data object). In other examples, the one or more conditions can be more complex (e.g., referencing various data objects, various properties of various data objects, various links between multiple data object types). For example, the one or more conditions can be met or satisfied when a new customer support ticket is received. In this example, the one or more conditions can reference a data object representing the new customer support ticket. The automation triggered can include automatically generating a description of the new customer support ticket using machine learning techniques (e.g., a large language model (LLM)).

As another example, the one or more conditions can be met or satisfied when an an endpoint communication device is or is not assigned a communication channel (e.g., an orthogonal frequency division multiplexing (OFDM) channel). In this example, the one or more conditions can reference the first data object of the first data object type representing the endpoint communication device, any link(s) between the first data object and other data objects, and/or a property included in a second data object of a second data object type representing the communication channel. The automation triggered can include automatically initiating a channel search or scan process to enable the endpoint communication device to be assigned to or allocated with a communication channel. In some embodiments, the one or more conditions can include at least one of: a modification of the first data object, a creation of the first data object, a deletion of the first data object, a modification of the first property, a creation of the first property, a deletion of the first property, a creation of a data object of the first data object type, a deletion of a data object of the first data object type, a creation of a property of the first property type, or a deletion of a property of the first property type.

The condition analyzer 160 can determine that the one or more conditions reference any data object, any data object type, any property, any property type, any link between data objects or data object types, and/or the like. In some examples, the condition analyzer 160 can determine that the one or more conditions reference at least one of: the first data object, the first property, the first data object type, or the first property type. For example, the one or more conditions can be satisfied when a particular type of sentence (e.g., "CPU utilization is above 95%") is created, or when a phrase is updated or added (e.g., add "Attention required:" before "CPU utilization is above 95%") to the particular type of sentence. The one or more conditions can thus reference a data object representing the particular type of sentence and/or a property (e.g., the property representing the phrase used to generate the particular type of sentence) included in the data object. As another example, the first data object can represent a status (e.g., power on, power off, sleep, idle, or the like) of a CPU, and the one or more conditions can reference the first data object (e.g., the one or more conditions satisfied when the status being "power on"). By inspecting, parsing, or otherwise analyzing (e.g., using a data processing service and/or based on an ontology) the one or more conditions, the condition analyzer 160 can determine that the one or more conditions reference at least the data object or the property of the data object. In other embodiments as noted above, the condition analyzer 160 can determine that the one or more conditions reference various data objects (e.g., power outage alert data objects), various properties (e.g., names, addresses, temperature, velocity, currency, timestamp, and/or the like) included in various data objects, various links between multiple data objects (e.g., power outage alert data objects and power outage log data objects) by inspecting, parsing, or otherwise analyzing the one or more conditions.

The action analyzer 180 can analyze effects associated with execution of an action of an action object. In some examples, the action analyzer 180 can determine that execution of an action of the first action object affects and/or references a data object, a data object type, a property, a property type, and/or the like. For example, the action analyzer 180 can determine that execution of an action of the first action object affects and/or references at least one of: the first data object, the first property, the first data object type, or the first property type. In this example, the action analyzer 180 can determine that the execution of the action (e.g., add the phrase to the particular type of sentence) of the first action object affects and/or references the first data object or the first property included in the first data object to cause the one or more conditions to be satisfied, thereby triggering the automation of the first automation object. More specifically, the action analyzer 180 can inspect, parse, or otherwise analyze a data structure (e.g., code, such as Python code, or other information stored using the "JSON" format for implementing the first action) that defines or specifies the first action object to determine whether the execution of the action of the first action object affects and/or references the first data object or the first property to cause the one or more conditions to be satisfied. The action analyzer 180 can further determine that execution of an action of a second action object (e.g., update the particular type of sentence from "CPU utilization is above 95%" to "CPU utilization is above 50%") does not affect and/or reference the first data object or the first property to cause the one or more conditions to be satisfied, thereby determining that the execution of the action of the second action object does not trigger the automation of the first automation object.

In some embodiments, the first action object, the second action object, the first data object, and the first automation object can be already included, represented, or displayed through an interactive graphical visualization. For example, the interactive graphical visualization can include at least a first node representing the first automation object, a second node representing the first action object, a third node representing the first data object, and a fourth node representing the second action object. By parsing the interactive graphical visualization, the automation trigger analyzer 110 can limit the determinations of what action objects and/or function objects affect the first data object or the first property to cause the one or more conditions to be satisfied (e.g., limit to the first action object and the second action object that are included in the interactive graphical visualization). In other embodiments, the action analyzer 180 can determine whether a third action object affects the first data object or the first property to cause the one or more conditions to be satisfied, where the third action object is not included in the interactive graphical visualization. In these embodiments, the interactive graph generator 106 may further optionally add the third action object into the interactive graphical visualization when the action analyzer 180 determines that the third action object affects the first data object or the first property to cause the one or more conditions to be satisfied.

In some embodiments, the user interface module 104 may further receive a selection (e.g., from the user device 150), made via the interactive user interface that provides the interactive graphical visualization, of a user interface element (e.g., a button, an icon, a tab, or the like) of the interactive user interface. In response to receiving the selection of the user interface element of the interactive user interface, the interactive graph generator 106 may update the interactive graphical visualization to further include a first edge connecting the second node representing the first action object and the first node representing the first automation object. The first edge can represent that the execution of the action of the first action object can cause the one or more conditions to be satisfied to trigger the automation of the first automation object. In contrast, the fourth node may be unconnected to the first node to indicate that the execution of the action of the second action object does not affect the first data object or the first property to cause the one or more conditions to be satisfied to trigger the automation of the first automation object. Advantageously, by interacting with the interactive user interface, the user device 150 may be presented with the interactive graphical representation concisely showing (e.g., using edges connecting nodes representing actions and automations) what actions (e.g., an action object), logics (e.g., a logic object), functions (e.g., a function object), and/or the like can reference which data object(s), data object type(s), link(s) between data objects or data object types, and/or the like to trigger certain automations.

### Example Database and Data Models

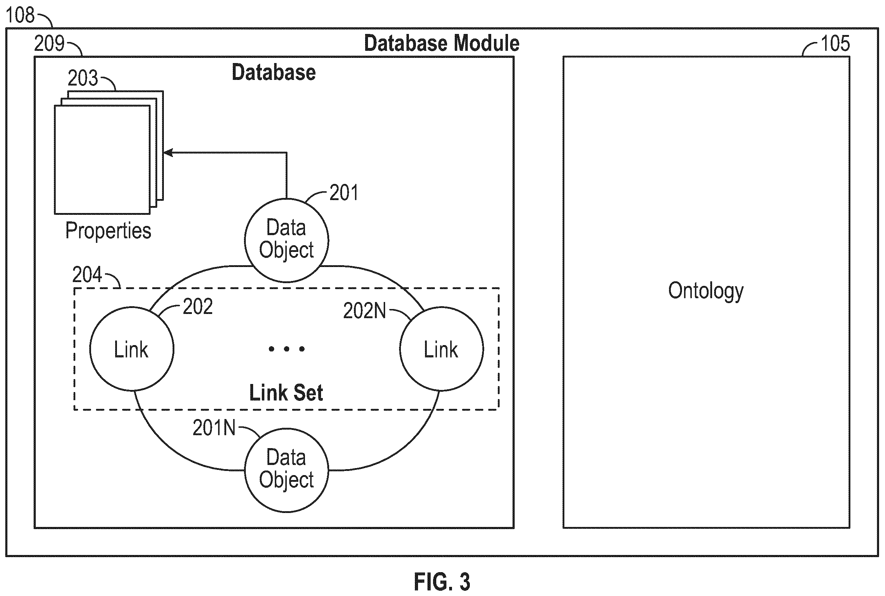

FIG. 3 illustrates an object-centric conceptual data model in the database module 108 of the workflow visualization system 102 according to various implementations of the present disclosure. The database module 108 may store the ontology 105 and the database 209. The ontology 105, as noted above, may include stored information providing a data model for storage of data in the database 209. The ontology 105 may be defined by one or more data object types, which may each be associated with one or more property types. At the highest level of abstraction, data object 201 is a container for information representing things in the world. For example, the data object 201 can represent an entity such as a server, a router, an interface, a personal computer, an electric motor, a wireless demodulator, a semiconductor wafer, a digital signal processor (DSP), a video encoder, , where the entity may be disposed or integrated within a system (e.g., a computing system, a communication system, an electronic equipment), and/or referenced in text data such as a document, an e-mail message, a news report, a written paper, an article, or the like. Data object 201 can also represent an event that happens at a point in time or for a duration. Each data object 201 may be associated with a unique identifier that uniquely identifies the data object within the database 209 of the database module 108.

In various implementations, different types of data objects may have different property types. For example, a "Server" data object might have an "Internet Protocol (IP) Address" property type and a "Router" data object might have a "Port" property type. Each property 203 as represented by data in the database module 108 may have a property type defined by the ontology 105 used by the database module 108. Objects may be instantiated in the database 209 in accordance with the corresponding object definition for the particular object in the ontology 105. For example, a specific network interface (e.g., an object of type "interface") with a particular Medium Access Control (MAC) address (e.g., a property of type "MAC address") and a specific configuration date (e.g., a property of type "date") may be stored in the database 209 as an interface object with associated MAC address and date properties as defined within the ontology 105. The data objects defined in the ontology 105 may support property multiplicity. In particular, the data object 201 may be allowed to have more than one property 203 of the same property type. For example, a "Server" data object might have multiple "Network Interface" properties or multiple "Storage Volume" properties. Each link 202 represents a connection between two data objects 201. In one implementation, the connection is either through a relationship, an event, or through matching properties. A relationship connection may be asymmetrical or symmetrical. For example, a "Server" data object A may be connected to a "Router" data object B by a "Connected To" relationship (where "Router" data object B has an asymmetric "Routes To" relationship to "Server" data object A), a "Peer Of" symmetric relationship to another "Server" data object C, and an asymmetric "Hosted On" relationship to a "Virtual Machine Host" data object X. The type of relationship between two data objects may vary depending on the types of the data objects. For example, a "Server" data object A may have an "Interfaces With" relationship with an "Interface" data object Y or have a "Transmits Through" relationship with a "Switch" data object E. As an example of an event connection, two "Server" data objects may be connected by a "Network Outage" data object representing a particular outage event if they were both affected by that event, or by a "Maintenance Window" data object representing a particular maintenance period if they both underwent maintenance at that time. In one implementation, when two data objects are connected by an event, they are also connected by relationships, in which each data object has a specific relationship to the event, such as, for example, an "Appears In" relationship.

As an example of a matching properties connection, two "Server" data objects representing different physical machines may both have a "Location" property that indicates their rack or data center. If the servers are located in the same rack, then their "Location" properties likely contain similar, if not identical, property values. In one implementation, a link between two data objects may be established based on similar or matching properties (e.g., property types and/or property values) of the data objects. These are just various examples of the types of connections that may be represented by a link and other types of connections may be represented; implementations are not limited to any particular types of connections between data objects. For example, a log file might contain references to two different objects. For example, a log file may contain a reference to a network interface (one object), and a server (a second object). A link between these two objects may represent a connection between these two entities through their co-occurrence within the same log file. Each data object 201 can have multiple links with another data object 201 to form a link set 204. For example, two "Server" data objects representing redundant systems could be linked through a "Redundant With" relationship, a matching "Location" property, and one or more matching "Event" properties (e.g., a shared maintenance window). Each link 202 as represented by data in the database 209 may have a link type defined by the ontology 105 and/or used by the database 209.

For ease of understanding, in some implementations, data objects (e.g., the data object 201 and the data object 201N), links between data objects (e.g., the link 202 and link 202N) that may represent relationships between the data objects, and properties of data objects (e.g., the properties 203) can be visualized using one or more graphical user interfaces (GUI). For example, an example user interface may show a graphical representation of relationships between data objects that are represented as nodes in the graphical representation. The data objects may include, for example, communication endpoint data objects, processor core data objects, electric motor data objects, computer data objects, and/or the like. The objects/nodes may have relationships and/or links with any of the other objects/nodes.

In some implementations, relationships between data objects may be stored as links, or in some implementations, as properties, where a relationship may be detected between the properties. In some cases, as stated above, the links may be directional. For example, a payment link may have a direction associated with the payment, where one person object is a receiver of a payment, and another person object is the payer of payment.

In addition to visually showing relationships between the data objects, a user interface may allow various other manipulations. For example, the objects within database module 108 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations.

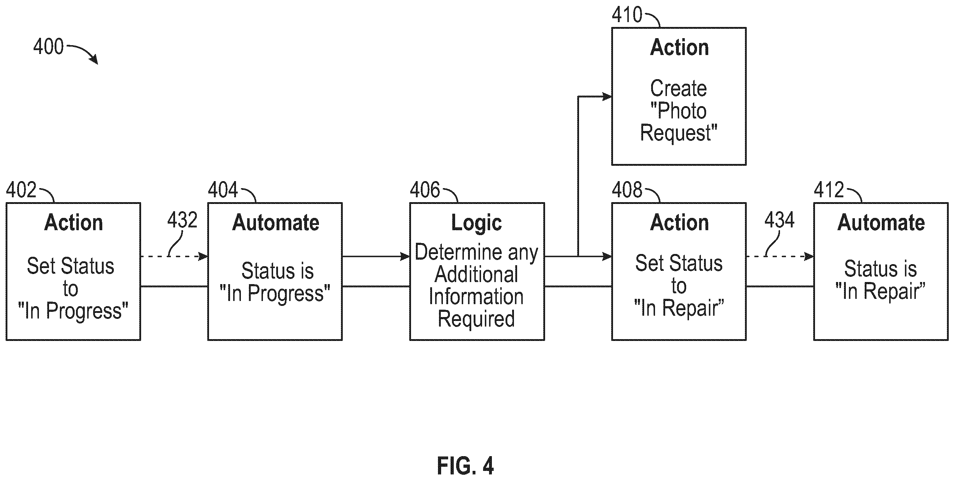

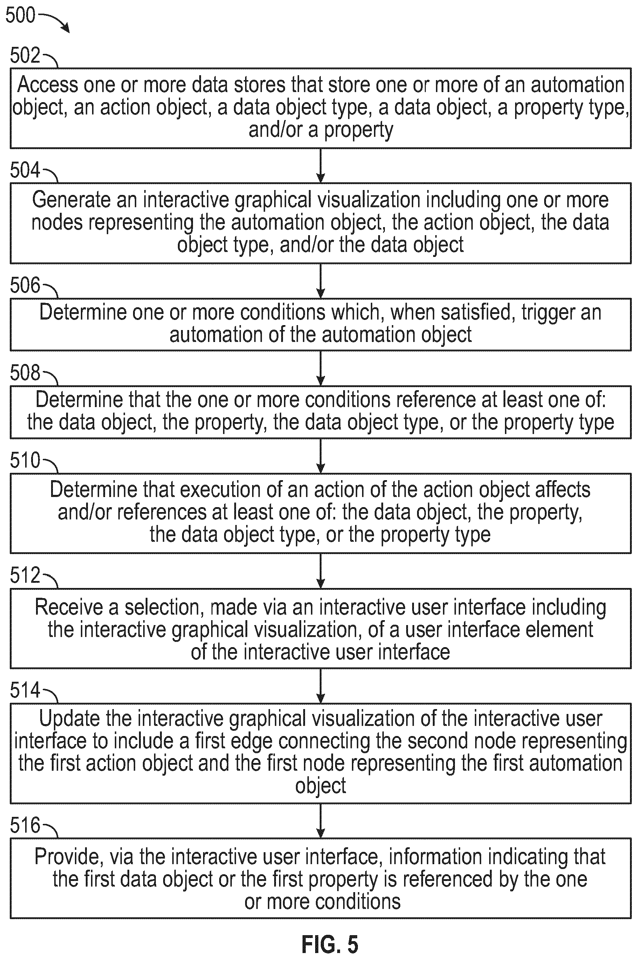

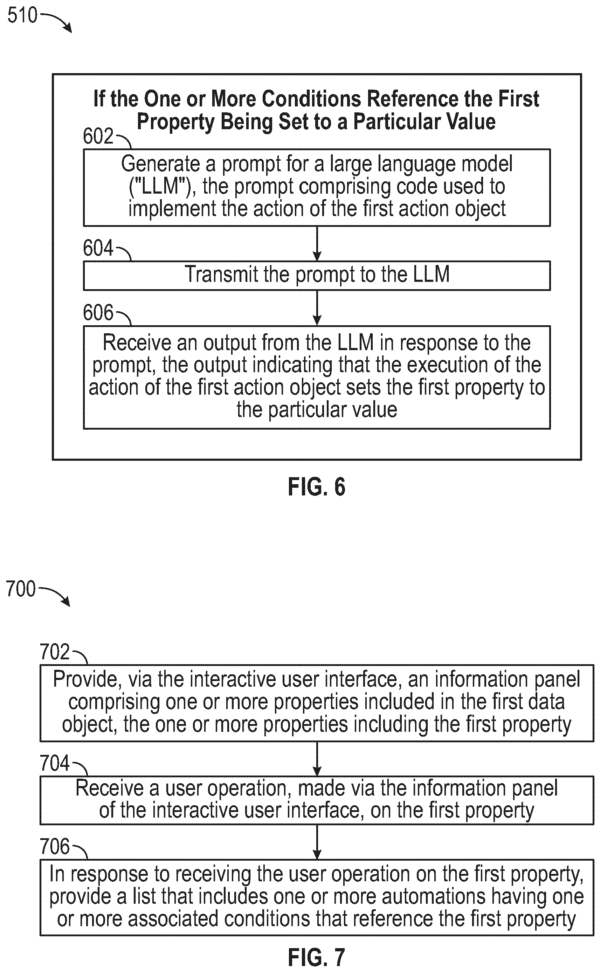

FIG. 4 illustrates an example graphical representation 400 (e.g., an example graph 400) including nodes representing action objects and automation objects that can be stored and/or analyzed by the workflow visualization system 102, according to various implementations of the present disclosure. In some implementations, the graph 400 can be generated by the automation trigger analyzer 110 and the interactive graph generator 106, optionally using one or more LLMs (e.g., the LLM 130 of FIG. 2), based on various processes and functionality as described, for example, in references to the flowcharts of FIGS. 5 and/or 6.

As shown in FIG. 4, the graph 400 includes at least a node 402, a node 404, a node 406, a node 408, a node 410, and a node 412. The node 402 and the node 404 are connected by an edge 432. The node 408 and the node 412 are connected by an edge 434. The node 402 represents a first action object that, when an action of the first action object is executed, sets a status (e.g., a property of a data object such as an alert status) of the data object to a particular value (e.g., "in progress"). The node 410 represents a second action object that creates a "Photo request" (e.g., creation of a "Photo request" data object). The node 408 represents a third action object that sets the status (e.g., the property of the data object) of the data object to a particular value (e.g., "in repair"). The node 404 represents a first automation object and indicates that an automation of the first automation object is triggered when the status of the data object is set to "in progress." The node 412 represents a second automation object and indicates that an automation of the second automation object is triggered when the status of the data object is set to "in repair." The node 406 represents a logic object that is used to determine if any additional information is required (e.g., for completing certain tasks or operations).

In some embodiments, the edge 432 can be generated by the interactive graph generator 106 and/or the automation trigger analyzer 110 through transmitting a prompt to and receiving an output from the LLM 130 of FIG. 2. Advantageously, by utilizing the LLM 130, the interactive graph generator 106 and/or the automation trigger analyzer 110 may more efficiently perform more detailed analysis (e.g., in contrast to simple analysis that only needs to determine whether a data object, a data object type, a link, a property of a data object is referenced by an automation object) to determine which actions, logics, and/or functions can cause particular conditions (e.g., a property of a data object being set to any particular value, or when the particular conditions reference various data objects, data object types, links, properties, and/or the like and become complicated) to be satisfied to trigger an automation. As such, the workflow visualization system 102 may both efficiently perform detailed analysis (e.g., when one or more conditions of an automation object are more complicated) and simple analysis (e.g., when one or more conditions of an automation object are less complicated) to determine whether an edge should be connected between a node representing an automation object and another node representing an action object, function object, or logic object. For example, the automation trigger analyzer 110 may generate a prompt for the LLM 130. The prompt can include code (e.g., Python code) used to implement the action of the first action object (e.g., set status of the data object type representing the alert to "in progress"). The automation trigger analyzer 110 may then transmit the prompt to the LLM 130. In response to the prompt, the automation trigger analyzer 110 may receive an output from the LLM 130 indicating that the execution of the action of the first action object sets the property (e.g., the status) included in the data object to the particular value (e.g., "in progress"). Based on the output, the interactive graph generator 106 may generate the graph 400 to include the edge 432 edge connecting the node 402 and the node 404. In contrast, the graph 400 may not connect the node 408 to the node 404. More specifically, the automation trigger analyzer 110 may similarly utilize the LLM 130 to determine that execution of an action of the third action object (e.g., set status of the data object type representing the alert to "in repair") does not set the property to the particular value (e.g., "in progress"), thereby not connecting the node 408 to the node 404 in the graph 400.

The automation trigger analyzer 110 and the interactive graph generator 106 can similarly utilize the LLM 130 to determine whether other nodes in the graph 400 should be connected with edges. For example, based on an output from the LLM 130, the automation trigger analyzer 110 and the interactive graph generator 106 can generate the graph 400 that includes the edge 434 connecting the node 408 and the node 412, without connecting the node 402 to the node 412. Advantageously, by utilizing one or more LLMs to determine action(s) that cause the one or more conditions to be satisfied to trigger an automation, the workflow visualization system 102 can more effectively or accurately identify and distinguish action objects that can trigger particular automation(s) from action objects that do not trigger the particular automation(s). As such, an interactive graphical visualization (e.g., the graph 400) that includes nodes and edges to depict automations and identified triggering actions and/or functions can be more accurate, less complicated (e.g., with fewer edges by not connecting action objects that do not trigger an automation of an automation object to the automation object), and/or optimized.

### Example Functionality and Operations of the System

FIGS. 5, 6, and 7 show flowcharts illustrating example operations of the workflow visualization system 102 (and/or various other aspects of the example computing environment 100), according to various embodiments. The blocks of the flowcharts illustrate example implementations, and in various other implementations various blocks may be rearranged, optional, and/or omitted, and/or additional block may be added. In various embodiments, the example operations associated with the flowcharts illustrated in FIGS. 5, 6, and 7 may be implemented, for example, by the one or more aspects of the workflow visualization system 102, various other aspects of the example computing environment 100, and/or the like.

FIG. 5 depicts a flowchart illustrating an example method 500 according to various embodiments. The method 500 may be implemented, for example, by the workflow visualization system 102 of FIGS. 1 and 2 to determine, and generate interactive graphical visualizations showing, dependencies, relationships, and interactions among components (e.g., data objects, action objects, function objects, automation objects, logic objects, and/or the like) associated with software-based workflows. In various implementations, the method 500 may be performed in part or in full by the workflow visualization system 102. For example, the workflow visualization system 102 may perform blocks 502, 504, 506, 508, 510, and 514 without performing blocks 512 and 516. The method 500 may be performed by the workflow visualization system 102 to generate example interactive graphical visualizations described with reference to FIGS. 8, 9, 10, and/or 11.

At block 502, the workflow visualization system 102 may access one or more data stores that store any data object of any data object type, any data object type, any property, any automation object, any action object, any property type, and/or the like. In some examples, the one or more data stores may store at least a first automation object, a first action object, a first data object type including a first property type, and a first data object of the first data object type including a first property of the first property type. For example, as noted above, the interactive graph generator 106 and/or the automation trigger analyzer 110 can access one or more data stores (e.g., the database module 108 of FIGS. 1 and 2) that store the first automation object, the first action object, the first data object type, and the first data object of the first data object type.

At block 504, the workflow visualization system 102 can generate an interactive graphical visualization including node(s) representing an automation object, an action object, a data object, a data object type, and/or the like. In some examples, the workflow visualization system 102 can generate an interactive graphical visualization including a first node representing the first automation object, a second node representing the first action object, and a third node representing the first data object type or the first data object. For example, the interactive graph generator 106 can generate the interactive graphical visualization including the first node representing the first automation object, the second node representing the first action object, and the third node representing the first data object type or the first data object.

At block 506, the condition analyzer 160 can determine one or more conditions which, when satisfied, trigger an automation of an automation object. In some examples, the condition analyzer 160 can determine one or more conditions of the first automation object which, when satisfied, trigger an automation of the first automation object. More specifically, the automation triggered when the one or more conditions are satisfied can include performing any types of operation(s) or task(s) (e.g., creating a sentence based on a phrase, sending an email to a particular recipient, issuing an power outage alert to an entity, generating a new support ticket for a customer support workflow, and/or the like). The first automation object and the one or more conditions can be stored in the database module 108 using any suitable data structure.

At block 508, the condition analyzer 160 can determine that the one or more conditions reference a data object, a data object type, a property, a property type, and/or the like. In some examples, the condition analyzer 160 can determine that the one or more conditions reference at least one of: the first data object, the first property, the first data object type, or the first property type. For example, the first data object can represent a status (e.g., power on, power off, sleep, idle, or the like) of a laptop, and the one or more conditions can reference the first data object (e.g., the one or more conditions satisfied when the status being "power on"). By inspecting, parsing, or otherwise analyzing (e.g., using a data processing service and/or based on an ontology) the one or more conditions, the condition analyzer 160 can determine that the one or more conditions reference at least the data object or the property of the data object. In other embodiments as noted above, the condition analyzer 160 can determine that the one or more conditions reference various data objects (e.g., power outage alert data objects), various properties (e.g., names, addresses, temperature, velocity, currency, timestamp, and/or the like) included in various data objects, various links between multiple data objects (e.g., power outage alert data objects and power outage log data objects) by inspecting, parsing, or otherwise analyzing the one or more conditions.

At block 510, the action analyzer 180 can determine that execution of an action of an action object affects and/or references a data object, a property, a data object type, and/or a property type. In some examples, the action analyzer 180 can determine that execution of an action of the first action object affects and/or references at least one of: the first data object, the first property, the first data object type, or the first property type. For example, the action analyzer 180 can determine that the execution of the action (e.g., add the phrase to the particular type of sentence) of the first action object affects the first data object or the first property included in the first data object to cause the one or more conditions to be satisfied, thereby triggering the automation of the first automation object.

At block 512, the workflow visualization system 102 can receive a selection, made via an interactive user interface including the interactive graphical visualization, of a user interface element of the interactive user interface. For example, the user interface module 104 can receive the selection (e.g., from the user device 150), made via the interactive user interface that provides the interactive graphical visualization, of the user interface element (e.g., a button, an icon, a tab, or the like) of the interactive user interface.

At block 514, the interactive graph generator 106 can update the interactive graphical visualization of the interactive user interface to include a first edge connecting the second node representing the first action object and the first node representing the first automation object, in response to receiving the selection of the user interface element of the interactive user interface. The first edge can represent that the execution of the action of the first action object can cause the one or more conditions to be satisfied to trigger the automation of the first automation object. Advantageously, by interacting with the interactive user interface, the user device 150 may be presented with the interactive graphical representation concisely showing (e.g., using edges connecting nodes representing actions and automations) what actions and/or functions can trigger certain automations.

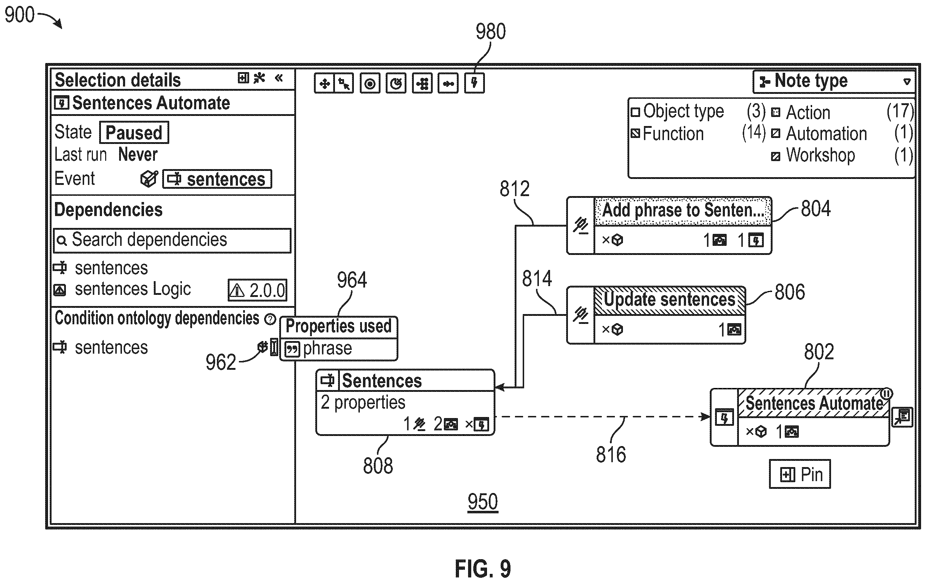

At block 516, the workflow visualization system 102 can provide, via the interactive user interface, information indicating that the first data object or the first property is referenced by the one or more conditions. For example, the user interface module 104 may provide through an information panel information indicating that the first data object or the first property included in the first data object is referenced by one or more conditions (e.g., creation of the first data object or updating the first property of the first data object) of an automation object which, when satisfied, trigger an automation of the automation object. Examples of the information provided at block 516 will be further described with reference to FIG. 9.

FIG. 6 is a flowchart illustrating an example implementation of the block 510 for using a LLM (e.g., the LLM 130 of FIG. 2) to determine that execution of an action of the first action object can cause one or more conditions to be satisfied to trigger an automation of an automation object. The flowchart of FIG. 6 may be performed by the workflow visualization system 102 to generate the example graphical representations described above with reference to FIG. 4. In the example implementation of the block 510, it is assumed that the one or more conditions reference the first property being set to a particular value (e.g., the one or more conditions satisfied when the first property is set to the particular value).

At block 602, the workflow visualization system 102 (e.g., the action analyzer 180) may generate a prompt for a large language model ("LLM"). In some examples, the prompt may include code used to implement the action of the first action object. For example, the prompt can include code (e.g., Python code) used to implement the action of the action object (e.g., set status of a data object representing the alert to "in progress").

At block 604, the workflow visualization system 102 can transmit the prompt to the LLM. For example, the action analyzer 180 can transmit the prompt to the LLM.

At block 606, the workflow visualization system 102 may receive an output from the LLM in response to the prompt. In some examples, the output may indicate that the execution of the action of the first action object sets the first property (e.g., the status) to the particular value (e.g., "in progress"). Based on the output, the interactive graph generator 106 may generate an interactive graphical visualization comprising an edge connecting a first node representing the automation object and a second node representing the action object.

Advantageously, by utilizing one or more LLMs to determine action(s) that cause the one or more conditions to be satisfied to trigger an automation, the action analyzer 180 can more effectively or accurately identify and distinguish action objects that can trigger particular automation(s) from action objects that do not trigger the particular automation(s). As such, an interactive graphical visualization that includes nodes and edges to depict automations and identified triggering actions and/or functions can be more accurate, less complicated (e.g., with fewer edges by not connecting action objects that do not trigger an automation of an automation object to the automation object), and/or optimized.

It should be noted that the flowchart of FIG. 6 can be also used to determine whether execution of a function of a function object affects data objects, properties, and/or links between data objects to cause one or more conditions to be satisfied to trigger one or more automations of one or more automation objects. For example, the action analyzer 180 may generate a prompt for the LLM, where the prompt includes function code used to implement the function. The function code may be complex (e.g., containing layers of nested or recursive function calls) or large in size (e.g., including thousands of lines of code). Nonetheless, the action analyzer 180 may then transmit the prompt to the LLM to utilize the LLM to parse or analyze the function code to determine whether execution of the function causes the one or more conditions to be satisfied. The action analyzer 180 may receive an output from the LLM, indicating that the execution of the function can affect certain data objects and/or properties to cause the one or more conditions to be satisfied to trigger an automation of a particular automation object. Based on the output from the LLM, the interactive graph generator 106 may generate an interactive graphical visualization including at least a first node representing the function object, a second node representing the particular automation object, and an edge connecting the first node and the second node. The edge can indicate that the execution of the function of the function object can cause the one or more conditions to be satisfied to trigger the automation of the particular automation object.

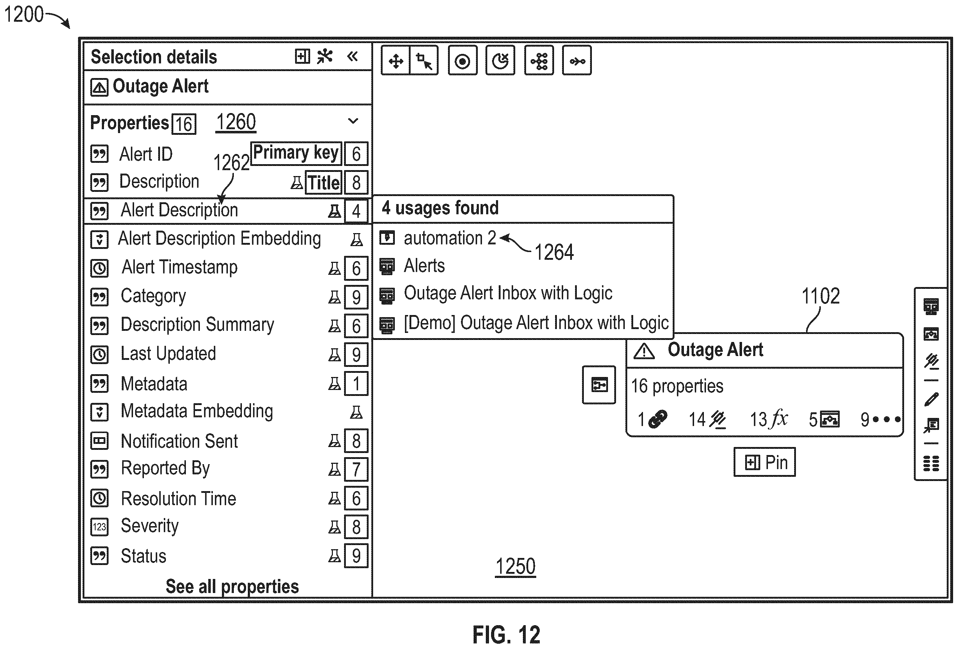

FIG. 7 is a flowchart illustrating an example method 700 for providing an information panel including properties of a data object and automations associated with a property of the data object. The method 700 may be implemented, for example, by the workflow visualization system 102 (e.g., the interactive graph generator 106 and/or the automation trigger analyzer 110) of FIGS. 1 and 2. In some implementations, the method 700 may be performed after block 514 or block 516 of FIG. 5. The method 700 may be performed by the workflow visualization system 102 to provide information indicative of lineage or provenance associated with properties included in data objects that will be described with reference to FIG. 12.

At block 702, the workflow visualization system 102 may provide, via the interactive user interface, an information panel comprising one or more properties included in the first data object, the one or more properties including the first property. For example, the user interface module 104 may provide, via the interactive user interface, the information panel comprising one or more properties included in the first data object, the one or more properties including the first property.

At block 704, the workflow visualization system 102 may receive a user operation, made via the information panel of the interactive user interface, on the first property. For example, the user interface module 104 may receive the user operation, made via the information panel of the interactive user interface, on the first property.

At block 706, the workflow visualization system 102 may provide a list that includes one or more automations having one or more associated conditions that reference the first property. For example, in response to receiving the user operation on the first property, the user interface module 104 may provide the list that includes one or more automations having one or more associated conditions that reference the first property.

Advantageously, the method 700 can be utilized by the workflow visualization system 102 to provide information showing automation(s), action(s), function(s), and/or the like that reference, affects, or are otherwise associated with a property (e.g., an alert description) included in a data object (e.g., an outage alert represented by the data object).

### Example User Interfaces and Related Functionality

FIGS. 8-12 show example user interfaces that illustrate example interactive graphical visualizations representing dependencies, relationships, and interactions among components (e.g., data objects, action objects, function objects, automation objects, logic objects, and/or the like) associated with software-based workflows. The example user interfaces may be presented through the user interface module 104 of the workflow visualization system 102 of FIGS. 1-2 and/or a user interface of the user device 150. Advantageously, the example user interfaces can allow the user device 150 and/or the workflow visualization system 102 to more efficiently determine, track, manage, and/or understand dependencies between automations and components that trigger the automations.

As shown in FIG. 8, an example user interface 800 may include an interactive graphical visualization 850 that includes a node 802, a node 804, a node 806, and a node 808. The interactive graphical visualization 850 can be generated by the workflow visualization system 102 (e.g., the interactive graph generator 106) based on the method 500. For example, the interactive graph generator 106 may perform blocks 502 and 504 of the method 500 to generate the interactive graphical visualization 850.

The node 802 may represent a first automation object stored and/or provided by the workflow visualization system 102. The node 804 may represent a first action object. The node 806 may represent a second action object. In some examples, the node 808 may represent any data object type (e.g., a sentence data object type) or any data object. In some examples, the node 808 may represent one or more data objects (e.g., a sentence data object of the sentence data object type) of a data object type. For example, the node 808 may represent a first data object. An edge 812 connects the node 804 and the node 808. An edge 814 connects the node 806 and the node 808. An edge 816 connects the node 802 and the node 808.

Here, the node 808 shows "sentences" to indicate that a data object type or one or more data objects (e.g., the first data object) of the data object type represented by the node 808 can represent real-world sentence(s) (e.g., a particular type of sentences). The first data object can include a first property (e.g., a phrase that is used to generate the particular type of sentences). The node 804 shows "Add phrase to sentences" to indicate, along with the edge 812, that execution of an action of the first action object can affect and/or update a property (e.g., the first property included in the first data object) or a property type of the data object type represented by the node 808. The node 806 shows "Update sentences" to indicate, along with the edge 814, that execution of the second action object can affect and/or update a data object type or one or more data objects (e.g., the first data object) represented by the node 808. The node 802 shows "Sentences Automate" to indicate that an automation of the first automation object relates to automatically performing a task or an operation that can be associated with a data object type or one or more data objects (e.g., the first data object) of the data object type represented by the node 808. The edge 816 indicates that one or more conditions of the first automation object reference the data object type or the one or more data objects of the data object type.

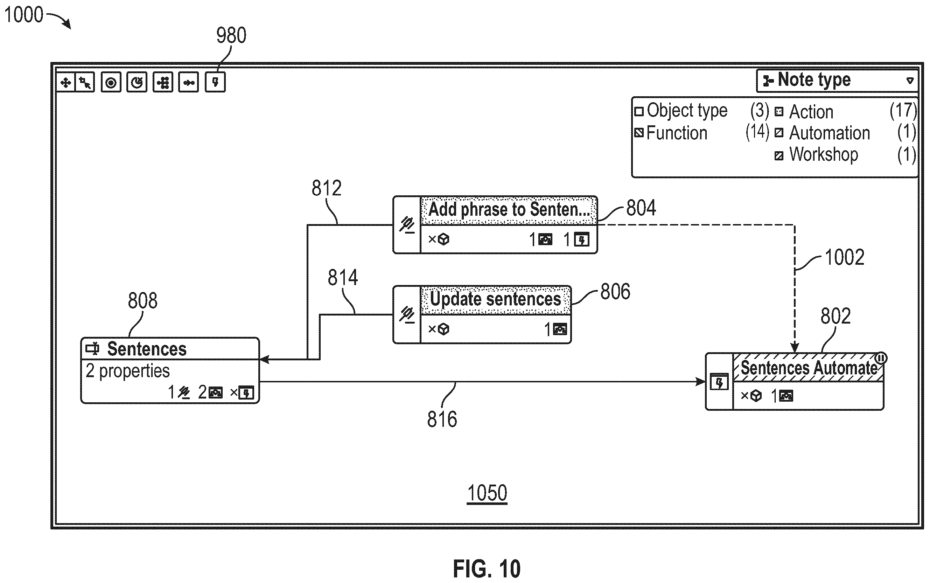

FIG. 9 shows an example user interface 900 that includes an interactive graphical visualization 950. As shown in FIG. 9, the interactive graphical visualization 950 may include the node 802, the node 804, the node 806, the node 808, the edge 812, the edge 814, and the edge 816. Additionally, the user interface 900 further includes a user interface element 962 and a user interface element 964 to show the one or more conditions of the first automation object represented by the node 802. The user interface also includes a user interface element 980 that will be described with reference to FIG. 10.

Here, the user interface element 962 indicates that the one or more conditions of the first automation object can include a creation of the first data object represented by the node 808, and/or a creation of a data object having the same data object type (e.g., a first data object type) as the first data object. The user interface element 964 indicates that the one or more conditions of the first automation object can include a creation, a deletion, and/or an update to a data object type, a data object, a property type, a property, and/or the like. For example, the user interface element 964 indicates that the one or more conditions of the first automation object can include a creation, a deletion, and/or an update to the first property included in the first data object. Here, the user interface element 964 shows "phrase." Although not illustrated in FIG. 9, the one or more conditions of the first automation object can additionally and/or optionally include a modification of any data object, a deletion of any first data object, a modification of the any property, a creation of any property, a deletion of the any property, a creation of any data object of any data object type, a deletion of any data object of any data object type, a creation of a property of any property type, or a deletion of a property of any property type.

FIG. 10 shows an example user interface 1000 that includes an interactive graphical visualization 1050 associated with the workflow visualization system 102, according to various implementations of the present disclosure. In various implementations, the example user interface 1000 may be generated by the user interface module 104 of the workflow visualization system 102 and/or a user interface of the user device 150 in response to a user selection from the user device 150 on the user interface element 980. For example, the interactive graph generator 106 may update the interactive graphical visualization 950 to generate or provide the interactive graphical visualization 1050 in response to receiving the selection, made via the interactive graphical visualization 950 of the user interface 900, of the user interface element 980.

As shown in FIG. 10, the interactive graphical visualization 1050 may include the node 802, the node 804, the node 806, the node 808, the edge 812, the edge 814, the edge 816, and the edge 1002 that is generated responsive to the user selection of the user interface element 980. The edge 1002 can connect the node 804 to the node 802 to represent that the execution of the action of the first action object represented by the node 804 can cause the one or more conditions of the first automation object represented by the node 802 to be satisfied to trigger the automation of the first automation object.

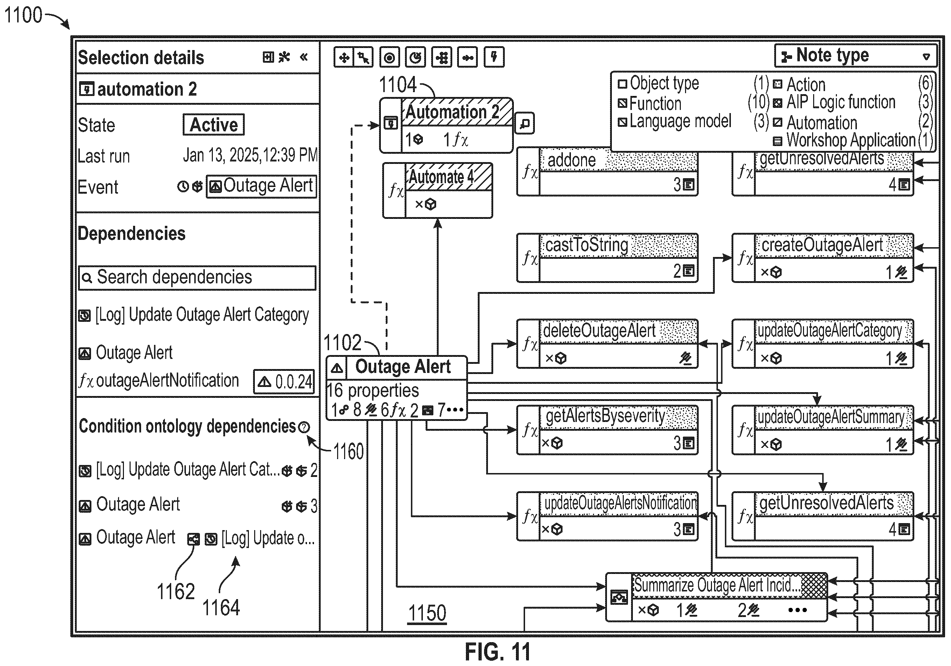

FIG. 11 shows an example user interface 1100 associated with the workflow visualization system 102, according to various implementations of the present disclosure. The user interface 1100 may include at least an interactive graphical visualization 1150. The user interface 1100 may be presented through the user interface module 104 of the workflow visualization system 102 and/or a user interface of the user device 150. In various implementations, the interactive graph generator 106 may generate or provide the interactive graphical visualization 1150 based at least on some blocks (e.g., blocks 506, 508, and/or 510) of the method 500 of FIG. 5.

As shown in the example of FIG. 11, the interactive graphical visualization 1150 includes at least the node 1102 and the node 1104, among other nodes. Here, the node 1102 represents an "Outage Alert" data object (e.g., power outage alert data object) that can be stored in the database module 108. The node 1104 represents an "automation 2" automation object. The user interface 1100 further includes at least a user interface element 1160, a user interface element 1162, and a user interface element 1164. The user interface element 1160 indicates one or more conditions of the "automation 2" automation object represented by the node 1104. The user interface element 1162 indicates that the one or more conditions of the "automation 2" automation object can reference a link between the "Outage Alert" data object and another data object that may or may not be shown in FIG. 11. The user interface element 1164 indicates that the one or more conditions can reference a data object (e.g., a log data object) or a data object type. Here, the user interface element 1160 shows "Condition ontology dependencies." The user interface element 1164 shows "[Log] Update O..."

FIG. 12 shows an example user interface 1200 that includes an example interactive graphical visualization 1250 and an information panel 1260 associated with the workflow visualization system 102, according to various implementations of the present disclosure. In various implementations, the example user interface 1200 may be presented through the user interface module 104 of the workflow visualization system 102 and/or a user interface of the user device 150. The information panel 1260 may provide information (e.g., a user interface element 1262 and a user interface element 1264) indicative of lineage or provenance associated with properties included in data objects.

For example, the information panel 1260 may provide information showing automation(s), action(s), function(s), and/or the like that reference, affects, or are otherwise associated with a property (e.g., an Alert Description) or a property type included in a data object (e.g., an Outage Alert represented by the data object) or a data object type. More specifically, the automation trigger analyzer 110 may parse or analyze any automation objects, action objects, logic objects, and/or function objects known to the workflow visualization system 102 to determine which automation objects, action objects, logic objects, and/or function objects are associated with (e.g., refers to) the property. The interactive graph generator 106 may then provide a list that includes automation objects, action objects, and/or function objects that refer to the property to generate the information panel 1260 for showing provenance of the property. In some embodiments, instead of parsing any automations, actions, and/or functions known to the workflow visualization system 102, the automation trigger analyzer 110 can parse or analyze automation objects, action objects, and/or function objects dependent upon or "downstream" to the data object (e.g., the "Outage Alert" data object) or a data object type that includes the property or a property type. Advantageously, this can allow the automation trigger analyzer 110 and the interactive graph generator 106 to more efficiently generate and/or provide provenance of the property.

As shown in FIG. 12, the interactive graphical visualization 1250 includes the node 1102 that represents the "Outage Alert" data object. The information panel 1260 includes at least the user interface element 1262 and the user interface element 1264. The information panel 1260 shows properties of the "Outage Alert" data object represented by the node 1102. The user interface element 1262 shows a property (e.g., "Alert Description") of the "Outage Alert" data object. The user interface element 1264 shows at least that the "automation 2" automation object references the property of the "Outage Alert" data object.

### Additional Example Implementations and Details

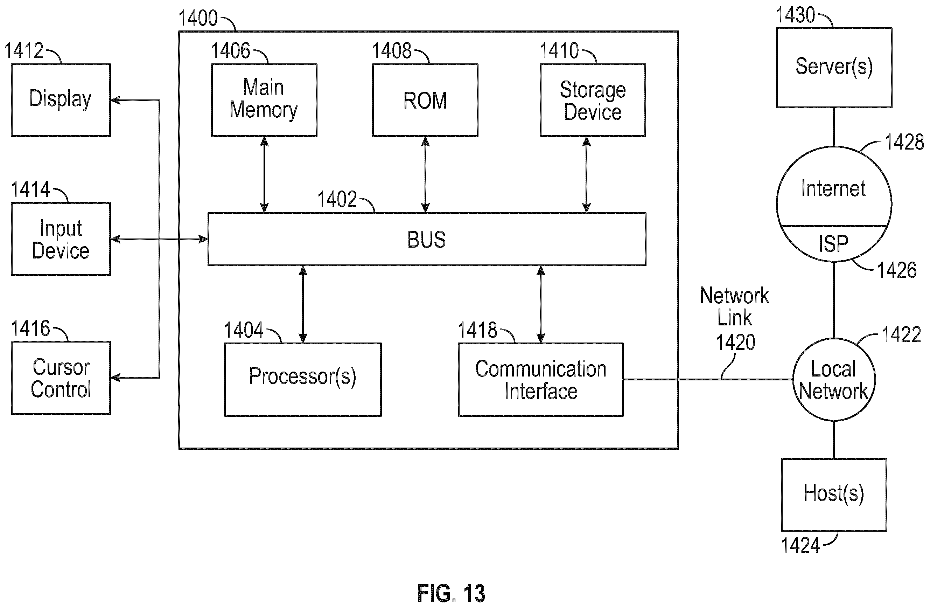

In an implementation of the system (e.g., one or more aspects of the workflow visualization system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 13) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In various implementations the virtual computing environment may comprise one or more virtual machines, containers, and/or other types of emulations of computing systems or environments. In various implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 13 shows a block diagram that illustrates a computer system 1400 upon which various implementations and/or aspects (e.g., one or more aspects of the computing environment 100, one or more aspects of the workflow visualization system 102, one or more aspects of the user device 150, one or more aspects of the data processing service 120, one or more aspects of the LLMs 130a and 130b, and/or the like) may be implemented. Multiple such computer systems 1400 may be used in various implementations of the present disclosure. Computer system 1400 includes a bus 1402 or other communication mechanism for communicating information, and a hardware processor, or multiple processors, 1004 coupled with bus 1402 for processing information. Hardware processor(s) 1404 may be, for example, one or more general purpose microprocessors.

Computer system 1400 also includes a main memory 1406, such as a random-access memory (RAM), cache and/or other dynamic storage devices, coupled to bus 1402 for storing information and instructions to be executed by processor 1404. Main memory 1406 also may be used for storing temporary variables or other intermediate information during execution of instructions to be executed by processor 1404. Such instructions, when stored in storage media accessible to processor 1404, render computer system 1400 into a special-purpose machine that is customized to perform the operations specified in the instructions. The main memory 1406 may, for example, include instructions to implement server instances, queuing modules, memory queues, storage queues, user interfaces, and/or other aspects of functionality of the present disclosure, according to various implementations.

Computer system 1400 further includes a read only memory (ROM) 1408 or other static storage device coupled to bus 1402 for storing static information and instructions for processor 1404. A storage device 1410, such as a magnetic disk, optical disk, or USB thumb drive (Flash drive), and/or the like, is provided and coupled to bus 1402 for storing information and instructions.

Computer system 1400 may be coupled via bus 1402 to a display 1412, such as a cathode ray tube (CRT) or LCD display (or touch screen), for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1400 may include a user interface module to implement a GUI that may be stored in a mass storage device as computer executable program instructions that are executed by the computing device(s). Computer system 1400 may further, as described below, implement the techniques described herein using customized hard-wired logic, one or more ASICs or FPGAs, firmware and/or program logic which in combination with the computer system causes or programs computer system 1400 to be a special-purpose machine. According to one implementation, the techniques herein are performed by computer system 1400 in response to processor(s) 1404 executing one or more sequences of one or more computer-readable program instructions contained in main memory 1406. Such instructions may be read into main memory 1406 from another storage medium, such as storage device 1410. Execution of the sequences of instructions contained in main memory 1406 causes processor(s) 1404 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1404 for execution. For example, the instructions may initially be carried on a magnetic disk or solid-state drive of a remote computer. The remote computer can load the instructions into its dynamic memory and send the instructions over a telephone line using a modem. A modem local to computer system 1400 can receive the data on the telephone line and use an infra-red transmitter to convert the data to an infra-red signal. An infra-red detector can receive the data carried in the infra-red signal and appropriate circuitry can place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card, cable modem, satellite modem, or a modem to provide a data communication connection to a corresponding type of telephone line. As another example, communication interface 1418 may be a local area network (LAN) card to provide a data communication connection to a compatible LAN (or WAN component to communicated with a WAN). Wireless links may also be implemented. In any such implementation, communication interface 1418 sends and receives electrical, electromagnetic, or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1026. ISP 1426 in turn provides data communication services through the worldwide packet data communication network now commonly referred to as the "Internet" 1028. Local network 1422 and Internet 1428 both use electrical, electromagnetic, or optical signals that carry digital data streams. The signals through the various networks and the signals on network link 1420 and through communication interface 1418, which carry the digital data to and from computer system 1400, are example forms of transmission media.

Computer system 1400 can send messages and receive data, including program code, through the network(s), network link 1420 and communication interface 1418. In the Internet example, a server 1430 might transmit a requested code for an application program through Internet 1428, ISP 1426, local network 1422 and communication interface 1418.

The received code may be executed by processor 1404 as it is received, and/or stored in storage device 1410, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer-readable storage devices storing software instructions executable by the computing system, the computerized method comprising:
accessing one or more data stores that store at least a first automation object, a first action object, a first data object type, and a first data object of the first data object type, wherein the first data object type includes a first property type, and wherein the first data object includes a first property of the first property type;
causing generation of an interactive user interface including an interactive graphical visualization, wherein the interactive graphical visualization includes a first node representing the first automation object, a second node representing the first action object, and a third node representing the first data object type or the first data object;
determining one or more conditions of the first automation object which, when satisfied, trigger an automation of the first automation object;
determining that the one or more conditions reference at least one of: the first data object, the first property, the first data object type, or the first property type;
determining that execution of an action of the first action object affects at least one of: the first data object, the first property, the first data object type, or the first property type; and
updating the interactive graphical visualization of the interactive user interface to include a first edge connecting the second node representing the first action object and the first node representing the first automation object, wherein the first edge represents that the execution of the action of the first action object can cause the one or more conditions to be satisfied to trigger the automation.

Clause 2. The computerized method of Clause 1 further comprising:
receiving a selection, made via the interactive user interface, of a user interface element of the interactive user interface; and
in response to receiving the selection of the user interface element of the interactive user interface, causing updating of the interactive graphical visualization to include the first edge.

Clause 3. The computerized method of Clause 1 further comprising:
determining that execution of an action of a second action object does not affect at least one of: the first data object, the first property, the first data object type, or the first property type,
wherein the interactive graphical visualization comprises a fourth node representing the second action object, and wherein the fourth node is unconnected to the first node to indicate that the execution of the action of the second action object cannot cause the one or more conditions to be satisfied to trigger the automation.

Clause 4. The computerized method of Clause 1, wherein the one or more conditions include at least one of: a modification of the first data object, a creation of the first data object, a deletion of the first data object, a modification of the first property, a creation of the first property, a deletion of the first property, a creation of a data object of the first data object type, a deletion of a data object of the first data object type, a creation of a property of the first property type, or a deletion of a property of the first property type.

Clause 5. The computerized method of Clause 1, wherein the one or more conditions reference a link between the first data object and a second data object of a second data object type, and wherein the link represents a first relationship between the first data object and the second data object.

Clause 6. The computerized method of Clause 5, wherein the one or more conditions include updating the link to represent a second relationship between the first data object and the second data object.

Clause 7. The computerized method of Clause 1, wherein the one or more conditions reference a second property included in a second data object of a second data object type.

Clause 8. The computerized method of Clause 1 further comprising:
providing, via the interactive user interface, information indicating that the first data object or the first property is referenced by the one or more conditions.

Clause 9. The computerized method of Clause 1, wherein the one or more conditions reference the first property being set to a particular value.

Clause 10. The computerized method of Clause 9, wherein determining that the execution of the action of the first action object affects at least one of the first data object, the first property, the first data object type, or the first property type comprises:
generating a prompt for a large language model ("LLM"), the prompt comprising code used to implement the action of the first action object;
transmitting the prompt to the LLM; and
receiving an output from the LLM in response to the prompt, the output indicating that the execution of the action of the first action object sets the first property to the particular value.

Clause 11. The computerized method of Clause 1, further comprising:
determining that execution of a function of a first function object affects the first data object or the first property to cause the one or more conditions to be satisfied,
wherein the interactive graphical visualization comprises a fifth node representing the first function object and a second edge connecting the first node and the fifth node, and wherein the second edge represents that the execution of the function can cause the one or more conditions to be satisfied to trigger the automation.

Clause 12. The computerized method of Clause 11, wherein determining that the execution of the function affects the first data object or the first property to cause the one or more conditions to be satisfied comprises parsing function code used to implement the function.

Clause 13. The computerized method of Clause 12, wherein parsing the function code to implement the function comprises:
generating a prompt for a large language model ("LLM"), the prompt comprising the function code;
transmitting the prompt to the LLM; and
receiving an output from the LLM in response to the prompt, the output indicating that the execution of the function can cause the one or more conditions to be satisfied.

Clause 14. The computerized method of Clause 1, wherein the first edge directs from the second node to the first node to indicate that the execution of the action of the first action object can cause the one or more conditions to be satisfied to trigger the automation.

Clause 15. The computerized method of Clause 1, further comprising:
providing, via the interactive user interface, an information panel comprising one or more properties included in the first data object, wherein the one or more properties include the first property;
receiving a user operation, made via the information panel of the interactive user interface, on the first property; and
in response to receiving the user operation on the first property, providing a list that includes one or more automations having one or more associated conditions that reference the first property.

Clause 16. The computerized method of Clause 1, wherein the interactive graphical visualization comprises a third edge connecting the first node and the third node, and wherein the third edge represents that the first data object or the first data object type is referenced by the one or more conditions.

Clause 17. The computerized method of Clause 16, wherein the first edge and the third edge are displayed according to different coloration scheme.

Clause 18. The computerized method of Clause 1, wherein the interactive graphical visualization of the interactive user interface is updated in response to determining that the execution of the action of the first action object affects at least one of: the first data object, the first property, the first data object type, or the first property type.

Clause 19. A system comprising:
one or more computer-readable storage mediums storing program instructions; and
one or more processors configured to execute the program instructions to cause the system to perform the computerized method of any of Clauses 1-18.

Clause 20. One or more computer-readable storage mediums storing program instructions, the program instructions executable by one or more processors to cause the one or more processors to perform the computerized method of any of Clauses 1-18.

## Claims

1. A computerized method, performed by a computing system having one or more hardware computer processors and one or more non-transitory computer-readable storage devices storing software instructions executable by the computing system, the computerized method comprising:
accessing one or more data stores that store at least a first automation object, a first action object, a first data object type, and a first data object of the first data object type, wherein the first data object type includes a first property type, and wherein the first data object includes a first property of the first property type;
causing generation of an interactive user interface including an interactive graphical visualization, wherein the interactive graphical visualization includes a first node representing the first automation object, a second node representing the first action object, and a third node representing the first data object type or the first data object;
determining one or more conditions of the first automation object which, when satisfied, trigger an automation of the first automation object;
determining that the one or more conditions reference at least one of: the first data object, the first property, the first data object type, or the first property type;
determining that execution of an action of the first action object affects at least one of: the first data object, the first property, the first data object type, or the first property type; and
updating the interactive graphical visualization of the interactive user interface to include a first edge connecting the second node representing the first action object and the first node representing the first automation object, wherein the first edge represents that the execution of the action of the first action object can cause the one or more conditions to be satisfied to trigger the automation.

2. The computerized method of Claim 1 further comprising:
receiving a selection, made via the interactive user interface, of a user interface element of the interactive user interface; and
in response to receiving the selection of the user interface element of the interactive user interface, causing updating of the interactive graphical visualization to include the first edge.

3. The computerized method of Claim 1 or Claim 2 further comprising:
determining that execution of an action of a second action object does not affect at least one of: the first data object, the first property, the first data object type, or the first property type,
wherein the interactive graphical visualization comprises a fourth node representing the second action object, and wherein the fourth node is unconnected to the first node to indicate that the execution of the action of the second action object cannot cause the one or more conditions to be satisfied to trigger the automation.

4. The computerized method of any preceding Claim, wherein the one or more conditions include at least one of: a modification of the first data object, a creation of the first data object, a deletion of the first data object, a modification of the first property, a creation of the first property, a deletion of the first property, a creation of a data object of the first data object type, a deletion of a data object of the first data object type, a creation of a property of the first property type, or a deletion of a property of the first property type.

5. The computerized method of any preceding Claim, wherein the one or more conditions reference a link between the first data object and a second data object of a second data object type, and wherein the link represents a first relationship between the first data object and the second data object, and optionally wherein the one or more conditions include updating the link to represent a second relationship between the first data object and the second data object.

6. The computerized method of any preceding Claim, wherein the one or more conditions reference a second property included in a second data object of a second data object type.

7. The computerized method of any preceding Claim further comprising:
providing, via the interactive user interface, information indicating that the first data object or the first property is referenced by the one or more conditions.

8. The computerized method of any preceding Claim, wherein the one or more conditions reference the first property being set to a particular value, and optionally wherein determining that the execution of the action of the first action object affects at least one of the first data object, the first property, the first data object type, or the first property type comprises:
generating a prompt for a large language model ("LLM"), the prompt comprising code used to implement the action of the first action object;
transmitting the prompt to the LLM; and
receiving an output from the LLM in response to the prompt, the output indicating that the execution of the action of the first action object sets the first property to the particular value.

9. The computerized method of any preceding Claim, further comprising:
determining that execution of a function of a first function object affects the first data object or the first property to cause the one or more conditions to be satisfied,
wherein the interactive graphical visualization comprises a fifth node representing the first function object and a second edge connecting the first node and the fifth node, and wherein the second edge represents that the execution of the function can cause the one or more conditions to be satisfied to trigger the automation, and optionally wherein determining that the execution of the function affects the first data object or the first property to cause the one or more conditions to be satisfied comprises parsing function code used to implement the function, and further optionally wherein parsing the function code to implement the function comprises:
generating a prompt for a large language model ("LLM"), the prompt comprising the function code;
transmitting the prompt to the LLM; and
receiving an output from the LLM in response to the prompt, the output indicating that the execution of the function can cause the one or more conditions to be satisfied.

10. The computerized method of any preceding Claim, wherein the first edge directs from the second node to the first node to indicate that the execution of the action of the first action object can cause the one or more conditions to be satisfied to trigger the automation.

11. The computerized method of any preceding Claim, further comprising:
providing, via the interactive user interface, an information panel comprising one or more properties included in the first data object, wherein the one or more properties include the first property;
receiving a user operation, made via the information panel of the interactive user interface, on the first property; and
in response to receiving the user operation on the first property, providing a list that includes one or more automations having one or more associated conditions that reference the first property.

12. The computerized method of any preceding Claim, wherein the interactive graphical visualization comprises a third edge connecting the first node and the third node, and wherein the third edge represents that the first data object or the first data object type is referenced by the one or more conditions, and optionally wherein the first edge and the third edge are displayed according to different coloration scheme.

13. The computerized method of any preceding Claim, wherein the interactive graphical visualization of the interactive user interface is updated in response to determining that the execution of the action of the first action object affects at least one of: the first data object, the first property, the first data object type, or the first property type.

14. A system comprising:
one or more computer-readable storage mediums storing program instructions; and
one or more processors configured to execute the program instructions to cause the system to perform the computerized method of any of Claims 1-13.

15. Program instructions, optionally stored on one or more computer-readable storage mediums, the program instructions executable by one or more processors to cause the one or more processors to perform the computerized method of any of Claims 1-13.
